# EUROPEAN PATENT APPLICATION

(11) **EP 1 245 856 A2**
(43) Date of publication of application: **02.10.2002**
(21) Application number: 02075960.1
(22) Date of filing: 11.03.2002
(51) Int. Cl.: F16F 9/53

(54) **Twin-tube magnetorheological damper**

(30) Priority: 30.03.2001 US 822792
(71) Applicant: Delphi Technologies, Inc., Troy, MI 48007 (US)
(72) Inventor: Jensen, Eric L., Dayton, OH 45429 (US); Oliver, Michael L., Xenia, OH 45395 (US); Kruckemeyer, William C., Beavercreek, OH 45434 (US)
(74) Representative: Denton, Michael John

(57) **Abstract**

A magnetorheological damper (10) includes an inner tube (12), a magnetorheological piston (14), and an outer tube (16). The magnetorheological piston (14) is located within and slideably engages the inner tube (12). The outer tube (16) surrounds the inner tube (12). The outer tube (16) is in fluid communication with the inner tube (12).

## Description

### TECHNICAL FIELD

The present invention relates generally to piston dampers, and more particularly to a magnetorheological (MR) damper.

### BACKGROUND OF THE INVENTION

Conventional piston dampers include non-MR dampers having a cylinder containing a non-MR fluid and having a piston which slideably engages the cylinder. The non-MR fluid passes through an orifice of the piston providing damping of relative motion between the piston and the cylinder. A compressed gas is located inside the cylinder and, in one known design, is kept from the non-MR fluid by a floating gas cup. A typical static pressure for the compressed gas is 250 to 550 psi (pounds per square inch) above atmospheric pressure depending on the travel position of the piston. The high static pressure necessary for damper operation undesirably increases friction which decreases desired motion isolation and undesirably pre-loads the mounting system. A rod attached to the piston extends away from the floating gas cup and outside the cylinder. The cylinder and the rod are attached to separate structures to dampen relative motion of the two structures along the direction of piston travel. Piston dampers are used as shock absorbers on automobiles and on other vehicles. Piston dampers also are used to provide motion resistance on exercise equipment such as stair climbers and rowing machines. In one known variation, an outer tube surrounds and is in fluid communication with the cylinder. This allows use of the gas in the outer tube at a typical static pressure of zero to 15 psi above atmospheric pressure depending on the travel position of the piston. A low static pressure does not increase friction and does not pre-load the mounting system.

Conventional piston dampers also include MR dampers having a cylinder containing an MR fluid and having an MR piston which slideably engages the cylinder. The MR fluid passes through an orifice of the MR piston. Exposing the MR fluid in the orifice to a varying magnetic field, generated by providing a varying electric current to an electric coil of the MR piston, varies the damping effect of the MR fluid in the orifice providing variably-controlled damping of relative motion between the MR piston and the cylinder. The electric current is varied to accommodate varying operating conditions, as is known to those skilled in the art. A compressed gas is located inside the cylinder and, in one known design, is kept from the MR fluid by a floating gas cup. A typical static pressure for the compressed gas is 250 to 550 psi (pounds per square inch) above atmospheric pressure depending on the travel position of the piston. A rod attached to the MR piston extends away from the floating gas cup and outside the cylinder. The cylinder and the rod are attached to separate structures to dampen relative motion of the two structures along the direction of piston travel.

What is needed is a magnetorheological damper which does not require the use of highly compressed gas.

### SUMMARY OF THE INVENTION

In a first expression of a first embodiment of the invention, a magnetorheological damper includes an inner tube, a magnetorheological piston, and an outer tube. The magnetorheological piston is located within, and slideably engages, the inner tube. The outer tube surrounds the inner tube. The outer tube is in fluid communication with the inner tube.

In a second expression of a first embodiment of the invention, a magnetorheological damper includes an inner tube, a magnetorheological fluid, a magnetorheological piston, and an outer tube. At least a portion of the magnetorheological fluid is disposed in the inner tube. The magnetorheological piston is located within, and slideably engages, the inner tube, and the magnetorheological piston contacts the magnetorheological fluid. The outer tube surrounds the inner tube. The outer tube is in fluid communication with the magnetorheological fluid in the inner tube.

Several benefits and advantages are derived from the invention. The magnetorheological piston allows variably-controlled damping in real time. The inner and outer tube design allows the use of a gas in the outer tube at a low pressure which does not increase friction and which and does not pre-load the mounting system.

### SUMMARY OF THE DRAWINGS

Figure 1 is an exterior view of a first embodiment of the magnetorheological damper of the invention;
Figure 2 is a cross-sectional view of the magnetorheological damper of Figure 1 taken along lines 2-2 of Figure 1, wherein the magnetorheological fluid and the gas have been omitted for clarity;
Figure 3 is an enlarged cross-sectional view showing the magnetorheological piston of the magnetorheological damper of Figure 2;
Figure 4 is an enlarged cross-sectional view showing the valve and the first end of the inner and outer tubes of the magnetorheological damper of Figure 2;
Figure 5 is an exploded perspective view of the valve of Figures 2 and 3; and
Figure 6 is an enlarged cross-sectional view showing the second end of the inner and outer tubes of the magnetorheological damper of Figure 2.

### DESCRIPTION OF THE PREFERRED EMBODIMENT

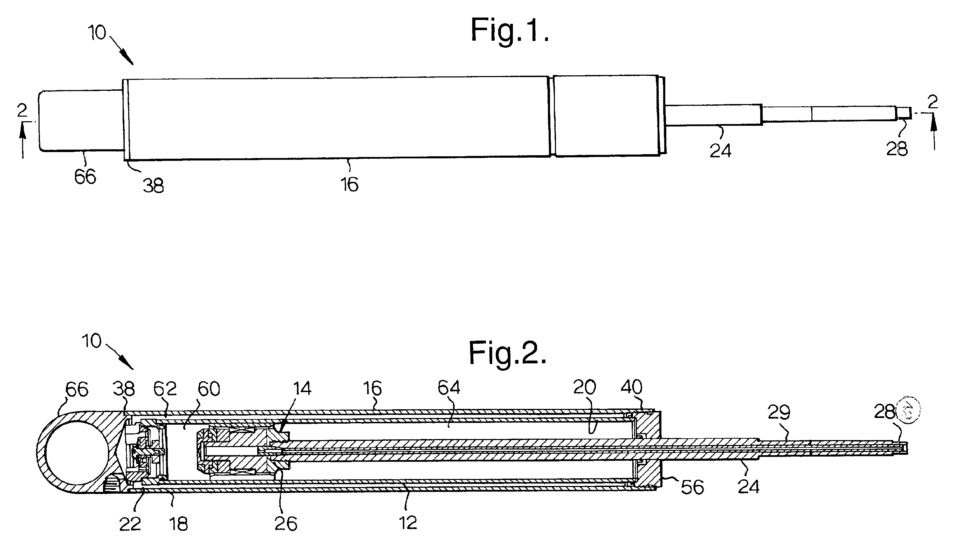

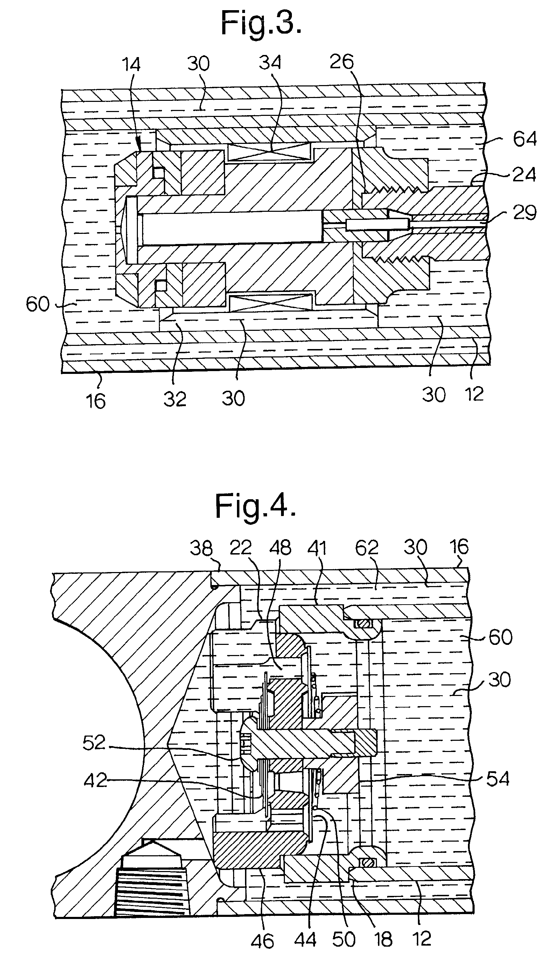

Referring now to the drawings, wherein like numerals represent like elements throughout, Figures 1 through 5 show a first embodiment of the magnetorheological damper 10 of the present invention. An application of the magnetorheological damper 10 is its use as a shock absorber for an automobile, an airplane, or other type of vehicle. Another application is use of the magnetorheological damper 10 to provide motion resistance on exercise equipment such as stair climbers and rowing machines. A further application is use of the magnetorheological damper 10 to provide motion isolation for a building, bridge, or other structure subject to earthquakes. An additional application is use of the magnetorheological damper 10 to dampen vibrations encountered by vehicles and structures in outer space. Other applications are left to the artisan.

In a first expression of the first embodiment of the invention shown in the figures, the magnetorheological damper 10 includes an inner tube 12, a magnetorheological piston 14, and an outer tube 16. A magnetorheological piston is a piston which includes a passageway and which is adapted for creating a magnetic field in the passageway. The magnetorheological piston 14 is disposed within and slideably engages the inner tube 12. The outer tube 16 surrounds the inner tube 12. The outer tube 16 is in fluid communication with the inner tube 12.

In one construction of the first expression, the inner and outer tubes 12 and 16 are substantially- coaxially-aligned. In one variation the inner and outer tubes 12 and 16, each has the shape of a substantially right-circular cylinder. Other shapes and positioning of the inner and outer tubes are left to the artisan.

In one design of the first expression, the inner tube 12 has a first end 18 and has a second end 20, and the outer tube 16 is in fluid communication with the inner tube 12 proximate the first end 18 of the inner tube 12. In one modification, the magnetorheological damper 10 also includes a valve 22 disposed proximate the first end 18 of the inner tube 12 and providing the fluid communication of the outer tube 16 with the inner tube 12. In one example, the magnetorheological piston 14 does not have any valve or valves.

In one example of the first expression, the magnetorheological damper 10 also includes a rod 24 having a first end 26 attached to the magnetorheological piston 14 and having a second end 28 extending outside the inner and outer tubes 12 and 16. In this example, the second end 20 of the inner tube 12 is disposed between the first end 18 of the inner tube 12 and the second end 28 of the rod 24. In this example, the rod 24 contains an electrode 29 operatively connected to the magnetorheological piston 14.

In a second expression of the first embodiment of the invention shown in the figures, the magnetorheological damper 10 includes an inner tube 12, a magnetorheological fluid 30, a magnetorheological piston 14, and an outer tube 16. A magnetorheological fluid is a fluid which exhibits Bingham plastic behavior in the presence of a magnetic field, as can be appreciated by those skilled in the art. A non-limiting example of a magnetorheological fluid is oil containing suspended fine iron particles. At least a portion of the magnetorheological fluid 30 is disposed in the inner tube 12. A magnetorheological piston is a piston which includes a passageway and which is adapted for creating a magnetic field in the passageway. The magnetorheological piston 14 is disposed within and slideably engages the inner tube 12. The magnetorheological piston 14 contacts the magnetorheological fluid 30. The outer tube 16 surrounds the inner tube 12. The outer tube 16 is in fluid communication with the magnetorheological fluid 30 in the inner tube 12.

In one construction of the second expression, the inner and outer tubes 12 and 16 are substantially- coaxially-aligned. In one variation the inner and outer tubes 12 and 16, each has the shape of a substantially right-circular cylinder. Other shapes and positioning of the inner and outer tubes are left to the artisan.

In one design of the second expression, the magnetorheological piston 14 has a magnetically energizable passageway 32, and the passageway 32 contains a portion of the magnetorheological fluid 30. In one variation, the magnetorheological piston 14 has an electromagnetic coil 34 for creating a magnetic field in the passageway 32 (i.e., for magnetically energizing the passageway 32).

In one example of the second expression, the outer tube 16 contains a portion of the magnetorheological fluid 30. It is understood that describing the outer tube 16 as containing a portion of the magnetorheological fluid 30 means that such portion of the magnetorheological fluid 30 is located between the inner tube 12 and the surrounding outer tube 16. In one modification, the magnetorheological fluid 30 in the outer tube 16 is essentially magnetically unaffected by the magnetorheological piston 14. In one variation, the magnetorheological fluid 30 in the inner tube 12 is essentially magnetically unaffected by the magnetorheological piston 14 except for the magnetorheological fluid 30 in the passageway 32 of the magnetorheological piston 14 in the inner tube 12.

In one implementation of the second expression, the inner tube 12 has a first end 18 and has a second end 20, and the outer tube 16 is in fluid communication with the inner tube 12 proximate the first end 18 of the inner tube 12. In one example, the outer tube 16 contains a gas 36. It is understood that describing the outer tube 16 as containing a gas 36 means that the gas 36 is located between the inner tube 12 and the surrounding outer tube 16. In this example, the outer tube 16 has a first end 38 proximate the first end 18 of the inner tube 12 and has a second end 40 proximate the second end 20 of the inner tube 12. In this example, the gas 36 is disposed between the magnetorheological fluid 30 of the outer tube 16 and the second end 40 of the outer tube 16. In one implementation, the gas 36 in the outer tube 16, for a particular travel position of the magnetorheological piston 14, has a static pressure at or above atmospheric pressure.

In one illustration of the second expression, the magnetorheological damper 10 also includes a rod 24 having a first end 26 attached to the magnetorheological piston 14 and having a second end 28 extending outside the inner and outer tubes 12 and 16. In this illustration, the second end 20 of the inner tube 12 is disposed between the first end 18 of the inner tube 12 and the second end 28 of the rod 24. In this illustration, the rod 24 contains an electrode 29 operatively connected to the magnetorheological piston 14.

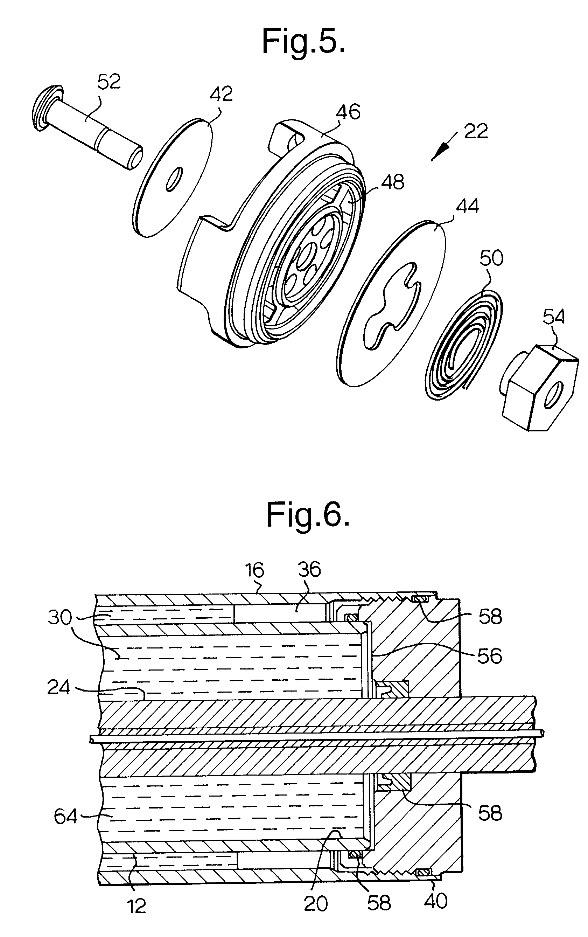

In one depiction of the second expression, the magnetorheological damper 10 also includes a valve 22 disposed proximate the first end 18 of the inner tube 12 and providing the fluid communication of the outer tube 16 with the inner tube 12. In one design, an adapter 41 joins the first end 18 of the inner tube 12 to the valve body 46. In another design, not shown, the adapter 41 is omitted, the first end 18 is lengthened, and the valve body 46 is configured to be joined to the front end 18. In one example, the valve 22 is a pressure and flow control valve. In one construction of the valve 22, the valve 22 includes first and second discs 42 and 44, a valve body 46 having at least one orifice 48, and a spring 50. In this construction, in an exploded view as seen in Figure 5, the valve body 46 is disposed between the first and second discs 42 and 44, the second disc 44 is disposed between the valve body 46 and the spring 50, and the spring 50 is disposed between the second disc 44 and the magnetorheological piston 14. In one variation, a bolt 52 and a nut 54 secure the valve components together. In one design, the magnetorheological piston 14 does not have any valve or valves.

Several benefits and advantages are derived from the invention. The magnetorheological piston allows variably-controlled damping in real time. The inner and outer tube design allows the use of a gas in the outer tube at a low pressure which does not increase friction and which and does not pre-load the mounting system.

In one representation of either or both of the previously-described first and second expressions, the rod 24 is a polished piston rod. The inner tube 12 contains magnetorheological fluid 30 and is the working pressure chamber of the magnetorheological damper 10. The fluid displacement caused by the movement of the rod 24 is satisfied by compliance provided by the outer tube 16 which contains magnetorheological fluid 30 and the gas 36. In one choice of materials, the gas consists essentially of air and provides an air space. The air space can be an open volume, closed cell foam (with the air trapped), an air filled bag or other such device. This volume can be at a minimum atmospheric pressure when the rod 24 is extended or some pressure above this value. The magnetorheological fluid 30 is contained at the second ends 20 and 40 of the inner and outer tubes 12 and 16 by a rod guide 56 and by seals 58.

As previously mentioned, the magnetorheological fluid 30 exhibits Bingham plastic behavior in the presence of a magnetic field. In this representation, the magnetic field is developed by an electromagnetic coil 34 which is inside the magnetorheological piston 14 and which is electrically connected to the electrode 29 inside the rod 24. The electrode 29, at the second end 28 of the rod 24, is in turn electrically connected to a current source which energizes the electromagnetic coil 34. The electric current is varied (which varies the damping effect of the magnetorheological fluid 30 in the passageway 32) to accommodate varying operating conditions, as is known to those skilled in the art.

In this representation, when the rod 24 moves the magnetorheological fluid 30 through the annular (in one design) passageway 32 in the magnetorheological piston 14, the flow is restricted and a pressure drop is created in the inner tube 12 across the magnetorheological piston 14. As the rod 24 is collapsed into the inner tube 12, some magnetorheological fluid 30 flows (i.e., is displaced) across the valve 22 into the outer tube 16 (i.e., into the chamber between the inner and outer tubes 12 and 16), and, in one example, an additional pressure drop is created by the valve 22. During extension of the rod 24 from the inner tube 12, the displaced magnetorheological fluid 30 returns from the outer tube 16 to the inner tube 14 through the valve 22. It is understood that, in some designs, more than one valve is employed in place of the valve 22.

It is noted that the pressure drop from region 60 through the valve 22 to region 62 must always be slightly higher than from region 60 through the passageway 32 to region 64 to maintain hydraulic balance within the magnetorheological damper 10. Since the magnetorheological piston 14 is the only location of variable pressure drop, the area of the rod 24 must be minimized to allow the greatest control of variation in damping.

In a first mounting arrangement of either or both of the previously-described first and second expressions, the magnetorheological damper 10 includes a ring mount 66 attached to the second end 40 of the outer tube 16. In the first or a different mounting arrangement, the first end 26 of the rod 24 has external threads (not shown) to provide a threaded tenon mount. In the first or a different mounting arrangement, the first end 26 of the rod 24 is attached to a second ring mount (not shown).

The foregoing description of several expressions of an embodiment of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A magnetorheological damper comprising:
a) an inner tube;
b) a magnetorheological piston disposed within and slideably engaging the inner tube; and
c) an outer tube surrounding the inner tube, wherein the outer tube is in fluid communication with the inner tube.

2. The magnetorheological damper of claim 1, wherein the inner tube has a first end and has a second end, and wherein the outer tube is in fluid communication with the inner tube proximate the first end of the inner tube.

3. The magnetorheological damper of claim 2, also including a valve disposed proximate the first end of the inner tube and providing the fluid communication of the outer tube with the inner tube.

4. The magnetorheological damper of claim 3, also including a rod having a first end attached to the magnetorheological piston and having a second end extending outside the inner and outer tubes, wherein the second end of the inner tube is disposed between the first end of the inner tube and the second end of the rod, and wherein the rod contains an electrode operatively connected to the magnetorheological piston.

5. The magnetorheological damper of claim 2, also including a rod having a first end attached to the magnetorheological piston and having a second end extending outside the inner and outer tubes, wherein the second end of the inner tube is disposed between the first end of the inner tube and the second end of the rod, and wherein the rod contains an electrode operatively connected to the magnetorheological piston.

6. A magnetorheological damper comprising:
a) an inner tube;
b) a magnetorheological fluid, wherein at least a portion of the magnetorheological fluid is disposed in the inner tube;
c) a magnetorheological piston disposed within and slideably engaging the inner tube and contacting the magnetorheological fluid; and
d) an outer tube surrounding the inner tube, wherein the outer tube is in fluid communication with the magnetorheological fluid in the inner tube.

7. The magnetorheological damper of claim 6, wherein the magnetorheological piston has a magnetically energizable passageway, and wherein the passageway contains a portion of the magnetorheological fluid.

8. The magnetorheological damper of claim 6, wherein the outer tube contains a portion of the magnetorheological fluid.

9. The magnetorheological damper of claim 8, wherein the magnetorheological fluid in the outer tube is essentially magnetically unaffected by the magnetorheological piston.

10. The magnetorheological damper of claim 8, wherein the inner tube has a first end and a second end, and wherein the outer tube is in fluid communication with the inner tube proximate the first end of the inner tube.

11. The magnetorheological damper of claim 10, wherein the outer tube contains a gas, wherein the outer tube has a first end proximate the first end of the inner tube and has a second end proximate the second end of the inner tube, and wherein the gas is disposed between the magnetorheological fluid of the outer tube and the second end of the outer tube.

12. The magnetorheological damper of claim 10, also including a rod having a first end attached to the magnetorheological piston and having a second end extending outside the inner and outer tubes, wherein the second end of the inner tube is disposed between the first end of the inner tube and the second end of the rod, and wherein the rod contains an electrode operatively connected to the magnetorheological piston.

13. The magnetorheological damper of claim 10, also including a valve disposed proximate the first end of the inner tube and providing the fluid communication of the outer tube with the inner tube.

14. The magnetorheological damper of claim 13, wherein the valve is a pressure and flow control valve.

15. The magnetorheological damper of claim 14, wherein the valve includes first and second discs, a valve body having at least one orifice, and a spring, wherein the valve body is disposed between the first and second discs, wherein the second disc is disposed between the valve body and the spring, and wherein the spring is disposed between the second disc and the magnetorheological piston.
